# EUROPEAN PATENT SPECIFICATION

(11) **EP 2 826 198 B1**
(45) Date of publication and mention of the grant of the patent: **15.07.2020**
(21) Application number: 12871433.4
(22) Date of filing: 15.03.2012
(51) Int. Cl.: H04L 9/08, G02F 1/167, G06F 3/01, H04W 12/04

(54) **A CONFIGURATION PROVISION DEVICE AND CORRESPONDING M2M DEVICE, SYSTEM, METHOD, COMPUTER PROGRAM AND COMPUTER PROGRAM PRODUCT**
KONFIGURATIONSBEREITSTELLUNGSVORRICHTUNG UND ENTSPRECHENDE M2M-VORRICHTUNG, SYSTEM, VERFAHREN, COMPUTERPROGRAMM UND COMPUTERPROGRAMMPRODUKT
DISPOSITIF D'APPORT DE CONFIGURATION ET DISPOSITIF M2M, SYSTÈME, PROCÉDÉ, PROGRAMME D'ORDINATEUR ET PRODUIT PROGRAMME D'ORDINATEUR CORRESPONDANTS

(43) Date of publication of application: 21.01.2015
(73) Proprietor: Telefonaktiebolaget LM Ericsson (publ), 164 83 Stockholm (SE)
(72) Inventor: ARKKO, Jari, FI-02700 Kauniainen (FI); KERÄNEN, Ari, FI-00100 Helsinki (FI); NOVO DIAZ, Oscar, FI-00180 Helsinki (FI); RISSANEN, Heidi-Maria, FI-00330 Helsinki (FI); TSIATSIS, Vlasios, SE-171 60 Solna (SE)
(74) Representative: Brann AB
(86) International application number: PCT/SE2012/050286
(87) International publication number: WO 2013/137787

(56) References cited:
- EP-A1- 1 881 400
- WO-A1-2007/111382
- WO-A1-2010/117310
- US-A1- 2002 169 623
- US-A1- 2008 048 880
- US-A1- 2008 292 105
- US-A1- 2009 326 966
- US-A1- 2010 163 613
- US-A1- 2010 185 501
- US-A1- 2011 148 750
- US-A1- 2011 210 171
- US-A1- 2012 287 219

## Description

### TECHNICAL FIELD

The invention relates to a configuration provision device and corresponding M2M (Machine-to-Machine) device, system, method, computer program and computer program product.

### BACKGROUND

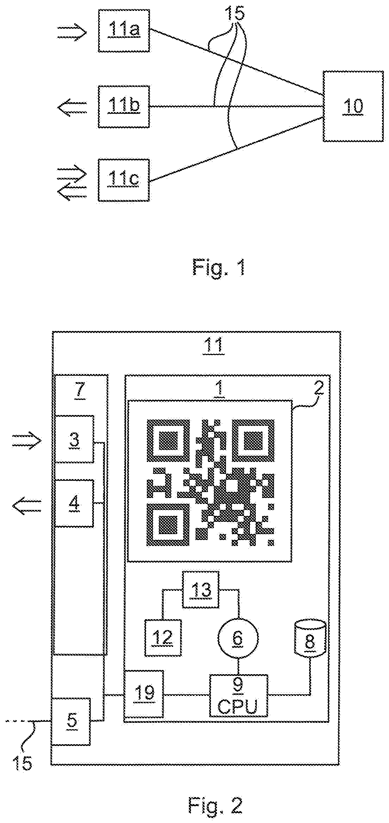

Machine-to-machine (M2M) solutions are increasing in popularity. As shown in Fig 1, M2M devices 11a-c can form part of sensor and/or actuator devices to allow collection of sensor data and/or control using actuators. In the example shown in Fig 1, a first M2M device 11a comprises only a sensor (indicated by an inbound arrow), a second M2M device 11b comprises only an actuator (indicated by an outbound arrow) and a third M2M device 11c comprises both a sensor and an actuator (indicated by both an inbound arrow and an outbound arrow).

The M2M devices communicate with a control system 10 over a communication channel 15. In this way, the control system 10 can collect sensor data and/or control the actuators of the M2M devices 11a-c. However, there is a security issue with the communication channel 15. For example, if the communication channel is wireless, third parties could snoop in on the communication. This issue can be reduced with encryption, but then the control system 10 must have a configuration which corresponds to the encryption parameters of each M2M device which uses encryption. When the number of M2M devices 11a-c is large, it is a great task to ensure that the control system 10 is configured in correspondance with all the M2M devices.

US 2011/148750 A1 is directed towards mobile devices with electronic ink displays configured to preserve and display critical data in response to low power indication.

It would be greatly beneficial if there was a way to provide a simple configuration process of M2M devices with good security.

### SUMMARY

It is thus an object to provide way to further enable configuration of an M2M device.

According to a first aspect, it is presented a configuration provision device comprising: an electronic paper display; an input device arranged to detect a user action; and a controller arranged to, when the input device of the configuration provision device detects a user action, determine configuration data of a machine-to-machine device associated with the configuration provision device, and display the configuration data of the machine-to-machine device on the electronic paper display of the configuration provision device. By presenting the 10 configuration data on the display, it is more difficult for an unwanted party to read the configuration data, compared to wireless presentation. Hence, this configuration provision device provides a more secure way to present configuration data.

The configuration data may comprise a digital security key. Presenting a digital security key may be particularly useful when the added security of configuration presentation on a display is used.

The controller may be arranged to display at least part of the configuration data on the electronic paper display in the form of a barcode. A barcode is easily read by a device with a scanner or camera. The barcode may be a two-dimensional barcode. The two-dimensional barcode has a large capacity to hold more or any conceivable configuration data.

The input device may comprise a push-button. A push-button makes for an intuitive user friendly user interface.

The configuration provision device may comprise an energy storage device arranged to be the only power source of the configuration provision device. This makes the configuration provision device portable and not dependent on a wired power connection.

The configuration provision device may comprise a power converter arranged to convert mechanical energy from the user action into electrical energy to charge the energy storage device. The converted mechanical energy of pushing the user action can sometimes be sufficient to power the configuration provision device and possibly also any connected M2M device.

The configuration data may be displayed on the electronic paper display using steganography. This makes allows the display to present more attractive representations, whereby the display can also present other information for the user, e.g. aesthetically pleasing or in other ways useful presentations. For example, the display could display a wallpaper or picture, while, using steganography, configuration data is shown in a way that it does not display the wallpaper or picture for human enjoyment.

The input device may be the only user input device of the configuration provision device. This makes for a particularly intuitive and simple user interface.

A second aspect is a machine-to-machine device comprising: a sensor or an actuator; a communication interface arranged to transfer data between a control system and the sensor or actuator; and the configuration provision device according to the first aspect. In other words, the configuration provision device can be embedded or connected to a machine-to-machine device.

The communication interface may comprise a near field wireless interface.

A third aspect is a system comprising: the machine-to-machine device according to the second aspect; and a portable device comprising a camera and a reader arranged to read configuration data displayed on the electronic paper display of the machine-to-machine device. This provides a system comprising both the configuration machine-to-machine device, comprising the configuration provision device, and a reader to allow convenient use when reading configuration data of a machine-to-machine device.

A fourth aspect is a method performed in a configuration provision device comprising an electronic paper display, an input device, and a controller, for providing configuration data of a machine-to-machine device associated with the configuration provision device. The method comprises the steps of: detecting a user action using the input device of the configuration provision device; determining the configuration data of the machine-to-machine device; and displaying the configuration data of the machine-to-machine device on the electronic paper display of the configuration provision device.

The step of determining configuration data may comprise obtaining configuration data comprising a digital security key.

The step of displaying the configuration data may comprise displaying the configuration data in the form of a barcode.
The barcode may be a two-dimensional barcode.
The method may comprise the step, before the step of determining configuration data, of converting mechanical energy from the user action into electrical energy to charge an energy storage device of the configuration provision device.

The step of displaying may comprise displaying the configuration data using steganography.

A fifth aspect is a computer program for providing configuration data associated with a configuration provision device comprising an electronic paper display, an input device, and a controller. The computer program comprises computer program code which, when run on a controller of the configuration provision device, causes the configuration provision device to: detect a user action using the input device of the configuration provision device; determine the configuration data of the machine-to-machine device; and display the configuration data of the machine-to-machine device on the electronic paper display of the configuration provision device.

The computer program code to determine configuration data may comprise computer program code to obtain configuration data comprising a digital security key.

The computer program code to display the configuration data may comprise computer program code to display the configuration data in the form of a barcode. The barcode may be a two-dimensional barcode.

The computer program code to display may comprise computer program code to display the configuration data using steganography.

A sixth aspect is a computer program product comprising a computer program according to the fifth aspect and a computer readable means on which the computer program is stored.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig 1 is a schematic drawing illustrating an environment in which embodiments presented herein can be applied;
Fig 2 is a schematic drawing illustrating an M2M device of Fig 1;
Fig 3 is a schematic diagram illustrating one embodiment of a configuration provision device of the M2M device of Fig 2;
Fig 4 is a schematic diagram illustrating the use of a reader with the configuration provision device of Fig 2 or 3;
Fig 5A is a flow chart illustrating one embodiment of a method according to one embodiment performed in the configuration provision device of Fig 2, 3 or 4;
Fig 5B is a flow chart illustrating one embodiment of a method according to one embodiment performed in the configuration provision device of Fig 2, 3 or 4; and
Fig 6 shows one example of a computer program product comprising computer readable means.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

Fig 1 is a schematic drawing illustrating an environment in which embodiments presented herein can be applied. M2M devices 11a-c can form part of sensor and/or actuator devices to allow collection of sensor data and/or control using actuators. In the example shown in Fig 1, a first M2M device 11a comprises only a sensor (indicated by an inbound arrow), a second M2M device 11b comprises only an actuator (indicated by an outbound arrow) and a third M2M device 11c comprises both a sensor and an actuator (indicated by both an inbound arrow and an outbound arrow).

The M2M devices 11a-c communicates with a control system 10 over a communication channel 15. In this way, the control system 10 can collect sensor data and/or control the actuators of the M2M devices 11a-c. The communication channel 15 can utilise a wireless communication technology, including a near field interface, such as Near Field Communication (NFC), Bluetooth or Wi-Fi (e.g. IEEE 802.11a/b/g/n). Alternatively or additionally, the communication channel can utilise wired communication, such as over USB (Universal Serial Bus), Ethernet, FireWire, Thunderbolt, etc.

While three M2M devices 11a-c are shown in Fig 1, any number of M2M devices can be provided, including one, two, four or more.

Fig 2 is a schematic drawing illustrating an M2M device 11 of Fig 1. Any one of the M2M devices 11a-c of Fig 1 is represented by the single M2M device 11 of Fig 2. The M2M device 11 comprises an external interface 7 comprising one or more sensors 3 and/or one or more actuators 4. The external interface 7 can be a physical component or merely a logical component used in this description without a physical counterpart. A communication interface 5 is arranged to transfer data between the one or more sensors 3 and/or one or more actuators 4 and the control system (not shown here) over the communication channel 15.

The M2M device 11 further comprises a configuration provision device 1 which is used to communicate configuration data related to the M2M device 11. The configuration provision device 1 can be embedded in the M2M device 11, attached to the M2M device 11 or be separate from, but in communication with, the M2M device 11.

The configuration provision device 1 comprises an electronic paper display 2. The electronic paper display 2 is power efficient, especially when the content of the electronic paper display 2 is not changed, using no or virtually no power. This is particularly useful in M2M devices 11 which are often battery powered. The electronic paper display 2 is also known as electronic ink.

An input device 6 is arranged to detect a user action. For example, the input device 6 can comprise a push-button, but can also comprise a dial, a switch, a touch sensitive device, etc. In one embodiment, the input device is a binary input device, only detecting the presence or absence of a single user action.

A controller 9 is provided using any suitable central processing unit (CPU), microcontroller, digital signal processor (DSP), etc., capable of executing software instructions stored in a computer program product 8, e.g. in the form of a memory. The computer program product 8 can be a memory or any combination of read and write memory (RAM) and read only memory (ROM). The memory also comprises persistent storage, which, for example, can be any single one or combination of magnetic memory, optical memory, or solid state memory.

Optionally, an energy storage device 12, such as a battery, super capacitor, etc., is provided to power the configuration provision device 1 and optionally also the rest of the M2M device 11. The energy storage device 12 may be the only power source of the configuration provision device 1 and optionally the rest of the M2M device 11, during normal operation.

As presented in more detail below, when the input device 6 detects a user action, the controller 9 determines configuration data associated with the M2M device 11 and displays the configuration data on the electronic paper display 2. The user action is for example, in the case where the input device 6 is a push button, a closing or opening of a circuit by a user by pushing the push button. The configuration data can include a digital security key, which, when communicated to the control system, allows the control system to decrypt data sent from the M2M device 11 to the control system over the communication channel 15. Optionally, the configuration data can include installation data, such as location etc.

In one embodiment, the configuration data is presented on the electronic paper display 2 using human readable representation, such as using text and/or images. This can be particularly useful e.g. to present installation data (such as location or similar) to an operator. In that situation, the operator simply reads the electronic paper display 2 and does not read a device for reading the data.

Optionally, the configuration data shown on the electronic paper display 2 can be in the form of a barcode. Such a barcode can e.g. a two dimensional barcode, or matrix barcode, such as a QR (Quick Response) code.

By presenting the configuration data on the electronic paper display 2, it is significantly more difficult for an unwanted party to detect the configuration data. The unwanted party must in that case have visual contact with the electronic paper display 2, which is more difficult than, e.g. listening in to radio based communication.

Other data other than configuration data can also be presented using the electronic paper display 2. For example, data from a sensor can be communicated using the electronic paper display 2.

A communication interface 19 allows the configuration provision device 1 to communicate with other components of the M2M device 11. The communication interface 19 is used to get the configuration data from the M2M device 11 to be able to present the configuration data on the electronic paper display 2.

Optionally, a power converter 13 converts mechanical energy, from when the input device 6 is used, to electric energy to charge the energy storage device 12. For example, if the input device 6 is a push button, some of the mechanical energy from pushing the push button is converted and used to charge the energy storage device 12. This energy can in some instances be sufficient to power the configuration provision device to retrieve the configuration data and adjust the electronic paper display 2 accordingly. In such a configuration, the configuration provision device 1 can be entirely powered from such power conversion.

The M2M device 11 may also comprise its own controller and/or memory (not shown). Alternatively, the M2M device 11 and the configuration provision device 1 share the same controller and memory housed in the configuration provision device 1 or in the M2M device 11 outside the configuration provision device 1.

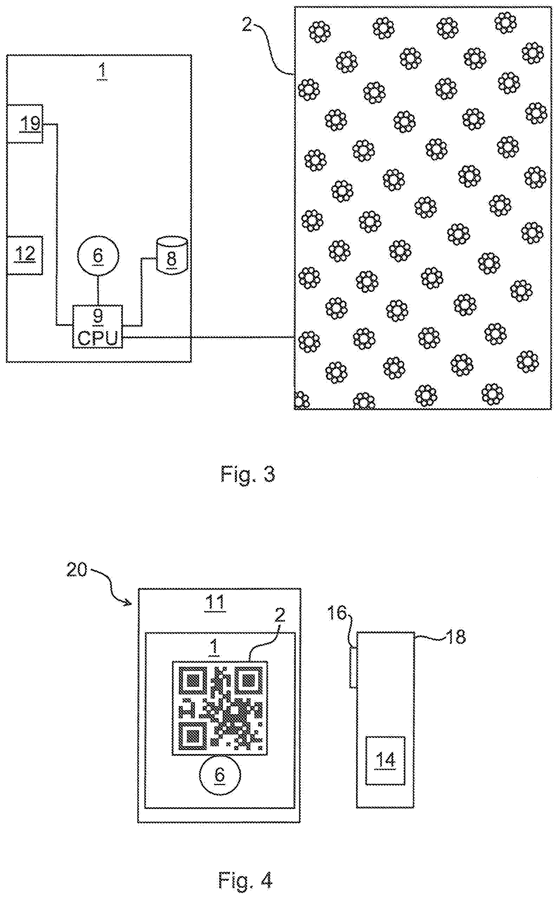

Fig 3 is a schematic diagram illustrating one embodiment of the configuration provision device 1 of the M2M device of Fig 2. In this example, the electronic paper display 2 is a large display, which is also used for other purposes. For example, the large electronic paper display 2 can be used as wallpaper. In such a situation, by using steganography, any configuration data shown on the electronic paper display 2 may be invisible to a human eye, but recognisable when captured by a camera and analysed by a processor. Steganography is a method used to hide information using slightly varying patterns in a primary picture.

Fig 4 is a schematic diagram illustrating the use of a reader with the configuration provision device of Fig 2 or 3. As explained above, configuration data is presented on the electronic paper display 2 of the configuration provision device 1 when a user action has been detected using the input device 6.

A portable device 18 comprises a camera 16 and a reader 14 arranged to read configuration data displayed on the electronic paper display 2. The portable device 18 can for example be a mobile communication device (e.g. a smart phone), a tablet computer, a laptop computer or an appropriately programmed camera. The reader 14 is a module which is capable of decoding the image captured by the camera 16 and provide utilise the configuration data, either in isolation or in collaboration with other components, such as the control system 19 of Fig 1.

The portable device 18 and one or more M2M devices 11 together make up a system 20.

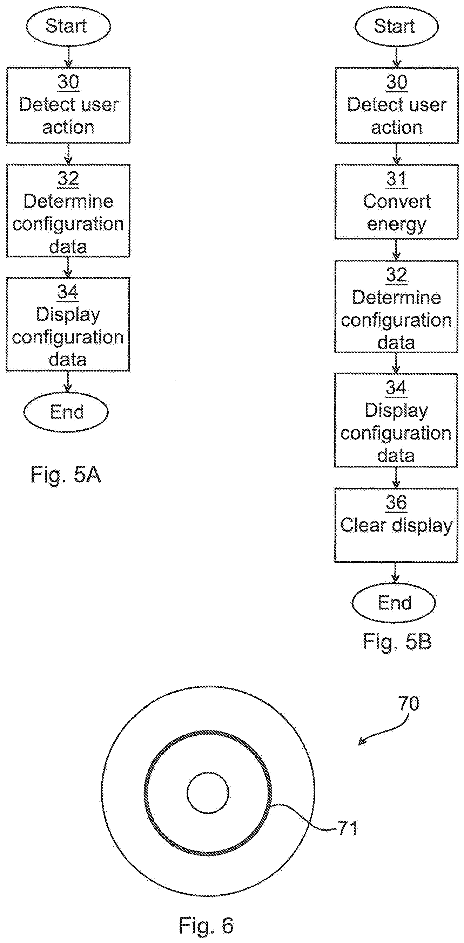

Fig 5A is a flow chart illustrating one embodiment of a method according to one embodiment performed in the configuration provision device 1 of Fig 2, 3 or 4. The method can be implemented as a computer program stored in the computer program product 8 (Fig 2).

In an initial detect user action step 30, a user action is detected using the input device 6. The user action can be a push of a push-button, but can also be the turn of a dial, the use of a touch sensitive device, etc. In one embodiment, the input device is a binary input device, only detecting the presence or absence of a single user action. Other examples of user actions that can be detected, using appropriate user input hardware and/or software, is double click, multi click, long click, morse code click, etc. The user action can optionally trigger a dynamic generation of an identity and/or digital security key of the M2M device. When dynamic generation of the digital security key is provided, this allows reconfiguration of the encryption used over the communication channel. This can be useful if it is suspected or known that the security of the communication between the M2M device and the control system has been compromised.

In a determine configuration data step 32, the configuration data is determined. The configuration data can be obtained from the M2M device, e.g. through the communication interface 19 (Fig 2).

In a display configuration data step 34, the configuration data is displayed on the electronic paper display 2. Optionally, as described above, the configuration data can be displayed using steganography.

Fig 5B is a flow chart illustrating one embodiment of a method according to one embodiment performed in the configuration provision device of Fig 2, 3 or 4. The steps in the flow chart of Fig 5A have equivalent steps in the flow chart of Fig 5B and will not be described again.

In an optional convert energy step 31, mechanical energy from the user action is converted into electrical energy to charge the energy storage device 12 (Fig 2) of the configuration provision device. Optionally, the user may need to press the button multiple times (multi click) to generate enough electricity for appropriate operation of the configuration provision device.

In an optional clear display step 36, the electronic paper display is cleared. This step can be performed after some time or upon detecting appropriate user action (such as a single click, double click, turn of dial etc.), allowing the displayed configuration data of the display configuration data step 34 to be read (by an operator or reader apparatus) before the electronic paper display 2 is cleared. The clearing can comprise making the electronic paper display 2 blank, or to return the electronic paper display to show what was displayed prior to displaying the configuration data.

Fig 6 shows one example of a computer program product comprising computer readable means. On this computer readable means, a computer program 71 can be stored, which computer program can cause a controller to execute a method according to embodiments described herein. In this example, the computer program product is an optical disc, such as a CD (compact disc) or a DVD (digital versatile disc) or a Blu-Ray disc. As explained above, the computer program product could also be embodied as a memory of a configuration provision device described above. While the computer program 71 is here schematically shown as a track on the depicted optical disk, the computer program can be stored in any way which is suitable for the computer program product.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A configuration provision device (1) comprising:
an electronic paper display (2);
an input device (6) arranged to detect a user action, wherein the user action triggers a dynamic generation of a digital security key of a machine-to-machine device (11, 11a, 11b, 11c) associated with the configuration provision device (1); and
a controller (9) arranged to:
when the input device (6) of the configuration provision device (1) detects the user action, determine configuration data of the machine-to-machine device (11, 11a, 11b, 11c), wherein the configuration data comprises the digital security key; and
display the configuration data, comprising the digital security key, of the machine-to-machine device (11, 11a, 11b, 11c) on the electronic paper display (2) of the configuration provision device (1).

2. The configuration provision device (1) according to the preceding claim, wherein the controller (9) is arranged to display at least part of the configuration data on the electronic paper display (2) in the form of a barcode.

3. The configuration provision device (1) according to claim 2, wherein the barcode is a two-dimensional barcode.

4. The configuration provision device (1) according to any one of the preceding claims, wherein the input device (6) comprises a push-button.

5. The configuration provision device (1) according to any one of the preceding claims, further comprising an energy storage device (12) arranged to be the only power source of the configuration provision device (1).

6. The configuration provision device (1) according to claim 5, further comprising a power converter (13) arranged to convert mechanical energy from the user action into electrical energy to charge the energy storage device (12).

7. The configuration provision device (1) according to any one of the preceding claims, wherein the configuration data is displayed on the electronic paper display (2) using steganography.

8. The configuration provision device (1) according to any one of the preceding claims, wherein the input device (6) is the only user input device of the configuration provision device (1).

9. A machine-to-machine device (11, 11a, 11b, 11c) comprising:
a sensor (3) or an actuator (4);
a communication interface (5) arranged to transfer data between a control system and the sensor (3) or the actuator (4); and
a configuration provision device (1) according to any one of the preceding claims.

10. The machine-to-machine device (11, 11a, 11b, 11c) according to claim 9, wherein the communication interface (5) comprises a near field wireless interface.

11. A system comprising:
a machine-to-machine device (11, 11a, 11b, 11c) according to any one of claims 9 to 10; and
a portable device (18) comprising a camera (16) and a reader (14) arranged to read the configuration data displayed on the electronic paper display (2) of the machine-to-machine device (11, 11a, 11b, 11c).

12. A method performed in a configuration provision device (1) comprising an electronic paper display (2), an input device (6), and a controller (9), for providing configuration data of a machine-to-machine device (11, 11a, 11b, 11c) associated with the configuration provision device (1), the method comprising steps of:
detecting (30) a user action using the input device (6) of the configuration provision device (1), wherein the user action triggers a dynamic generation of a digital security key of the machine-to-machine device (11, 11a, 11b, 11c);
determining (32) the configuration data of the machine-to-machine device (11, 11a, 11b, 11c), wherein the configuration data comprises the digital security key; and
displaying (34) the configuration data, comprising the digital security key, of the machine-to-machine device (11, 11a, 11b, 11c) on the electronic paper display (2) of the configuration provision device (1).

13. A computer program (71) executed in a configuration provision device for providing configuration data associated with a machine-to-machine device (11, 11a, 11b, 11c) associated with the configuration provision device (1) which comprises an electronic paper display (2), an input device (6), and a controller (9), the computer program (71) comprising computer program code which, when run on the controller (9), causes the configuration provision device (1) to:
detect a user action using the input device (6) of the configuration provision device (1), wherein the user action triggers a dynamic generation of a digital security key of the machine-to-machine device (11, 11a, 11b, 11c);
determine the configuration data of the machine-to-machine device (11, 11a, 11b, 11c), wherein the configuration data comprises the digital security key; and
display the configuration data, comprising the digital security key, of the machine-to-machine device (11, 11a, 11b, 11c) on the electronic paper display (2) of the configuration provision device (1).

## Patentansprüche

1. Konfigurationsbereitstellungsvorrichtung (1), Folgendes umfassend:
eine elektronische Papieranzeige (2);
eine Eingabevorrichtung (6), die dazu angeordnet ist, eine Benutzeraktion zu erkennen, wobei die Benutzeraktion eine dynamische Erzeugung eines digitalen Sicherheitsschlüssels für eine Machine-to-Machine-Vorrichtung (11, 11a, 11b, 11c) auslöst, die der Konfigurationsbereitstellungsvorrichtung (1) zugeordnet ist; und
eine Steuerung (9), die zu Folgendem angeordnet ist:
Bestimmen von Konfigurationsdaten der Machine-to-Machine-Vorrichtung (11, 11a, 11b, 11c), wenn die Eingabevorrichtung (6) der Konfigurationsbereitstellungs-vorrichtung (1) die Benutzeraktion erkennt, wobei die Konfigurationsdaten den digitalen Sicherheitsschlüssel umfassen; und
Anzeigen der Konfigurationsdaten der Machine-to-Machine-Vorrichtung (11, 11a, 11b, 11c), die den digitalen Sicherheitsschlüssel umfassen, auf der elektronischen Papieranzeige (2) der Konfigurationsbereitstellungsvorrichtung (1).

2. Konfigurationsbereitstellungsvorrichtung (1) nach dem vorhergehenden Anspruch, wobei die Steuerung (9) dazu angeordnet ist, mindestens einen Teil der Konfigurationsdaten auf der elektronischen Papieranzeige (2) in der Form eines Barcodes anzuzeigen.

3. Konfigurationsbereitstellungsvorrichtung (1) nach Anspruch 2, wobei der Barcode ein zweidimensionaler Barcode ist.

4. Konfigurationsbereitstellungsvorrichtung (1) nach einem der vorhergehenden Ansprüche, wobei die Eingabevorrichtung (6) einen Druckknopf umfasst.

5. Konfigurationsbereitstellungsvorrichtung (1) nach einem der vorhergehenden Ansprüche, ferner eine Energiespeichervorrichtung (12) umfassend, die dazu angeordnet ist, die einzige Energiequelle der Konfigurationsbereitstellungsvorrichtung (1) zu sein.

6. Konfigurationsbereitstellungsvorrichtung (1) nach Anspruch 5, ferner einen Energiewandler (13) umfassend, der dazu angeordnet ist, mechanische Energie von der Benutzeraktion in elektrische Energie zum Laden der Energiespeichervorrichtung (12) umzuwandeln.

7. Konfigurationsbereitstellungsvorrichtung (1) nach einem der vorhergehenden Ansprüche, wobei die Konfigurationsdaten durch Verwenden von Steganographie auf der elektronischen Papieranzeige (2) angezeigt werden.

8. Konfigurationsbereitstellungsvorrichtung (1) nach einem der vorhergehenden Ansprüche, wobei die Eingabevorrichtung (6) die einzige Benutzereingabevorrichtung der Konfigurationsbereitstellungsvorrichtung (1) ist.

9. Machine-to-Machine-Vorrichtung (11, 11a, 11b, 11c), Folgendes umfassend:
einen Sensor (3) oder einen Aktor (4);
eine Kommunikationsschnittstelle (5), die dazu angeordnet ist, Daten zwischen einem Steuerungssystem und dem Sensor (3) oder dem Aktor (4) zu übertragen; und
eine Konfigurationsbereitstellungsvorrichtung (1) nach einem der vorhergehenden Ansprüche.

10. Machine-to-Machine-Vorrichtung (11, 11a, 11b, 11c) nach Anspruch 9, wobei die Kommunikationsschnittstelle (5) eine drahtlose Nahfeldschnittstelle umfasst.

11. System, Folgendes umfassend:
Machine-to-Machine-Vorrichtung (11, 11a, 11b, 11c) nach einem der Ansprüche 9 bis 10; und
eine tragbare Vorrichtung (18), die eine Kamera (16) und ein Lesegerät (14) umfasst, das dazu angeordnet ist, die Konfigurationsdaten zu lesen, die auf der elektronischen Papieranzeige (2) der Machine-to-Machine-Vorrichtung (11, 11a, 11b, 11c) angezeigt werden.

12. Verfahren, das in einer Konfigurationsbereitstellungsvorrichtung (1) ausgeführt wird, die eine elektronische Papieranzeige (2), eine Eingabevorrichtung (6) und eine Steuerung (9) zum Bereitstellen von Konfigurationsdaten einer Machine-to-Machine-Vorrichtung (11, 11a, 11b, 11c) umfasst, die der Konfigurationsbereitstellungsvorrichtung (1) zugeordnet ist, wobei das Verfahren folgende Schritte umfasst:
Erkennen (30) einer Benutzeraktion durch Verwenden der Eingabevorrichtung (6) der Konfigurationsbereitstellungsvorrichtung (1), wobei die Benutzeraktion eine dynamische Erzeugung eines digitalen Sicherheitsschlüssels der Machine-to-Machine-Vorrichtung (11, 11a, 11b, 11c) auslöst;
Bestimmen (32) der Konfigurationsdaten der Machine-to-Machine-Vorrichtung (11, 11a, 11b, 11c), wobei die Konfigurationsdaten den digitalen Sicherheitsschlüssel umfassen; und
Anzeigen (34) der Konfigurationsdaten der Machine-to-Machine-Vorrichtung (11, 11a, 11b, 11c), die den digitalen Sicherheitsschlüssel umfassen, auf der elektronischen Papieranzeige (2) der Konfigurationsbereitstellungsvorrichtung (1).

13. Computerprogramm (71), ausgeführt in einer Konfigurationsbereitstellungsvorrichtung zum Bereitstellen von Konfigurationsdaten, die einer Machine-to-Machine-Vorrichtung (11, 11a, 11b, 11c) zugeordnet sind, die der Konfigurationsbereitstellungsvorrichtung (1) zugeordnet ist, die eine elektronische Papieranzeige (2), eine Eingabevorrichtung (6) und eine Steuerung (9) umfasst, wobei das Computerprogramm (71) einen Computerprogrammcode umfasst, der, wenn er in der Steuerung (9) abläuft, die Konfigurationsbereitstellungsvorrichtung (1) zu Folgendem veranlasst:
Erkennen einer Benutzeraktion durch Verwenden der Eingabevorrichtung (6) der Konfigurationsbereitstellungsvorrichtung (1), wobei die Benutzeraktion eine dynamische Erzeugung eines digitalen Sicherheitsschlüssels der Machine-to-Machine-Vorrichtung (11, 11a, 11b, 11c) auslöst;
Bestimmen der Konfigurationsdaten der Machine-to-Machine-Vorrichtung (11, 11a, 11b, 11c), wobei die Konfigurationsdaten den digitalen Sicherheitsschlüssel umfassen; und
Anzeigen der Konfigurationsdaten der Machine-to-Machine-Vorrichtung (11, 11a, 11b, 11c), die den digitalen Sicherheitsschlüssel umfassen, auf der elektronischen Papieranzeige (2) der Konfigurationsbereitstellungsvorrichtung (1).

## Revendications

1. Dispositif d'apport de configuration (1) comprenant :
un afficheur papier électronique (2) ;
un dispositif d'entrée (6) agencé pour détecter une action d'utilisateur, dans lequel l'action d'utilisateur déclenche une génération dynamique d'une clé de sécurité numérique d'un dispositif de communication entre machines (11, 11a, 11b, 11c) associé au dispositif d'apport de configuration (1) ; et
un dispositif de commande (9) agencé pour :
lorsque le dispositif d'entrée (6) du dispositif d'apport de configuration (1) détecte l'action d'utilisateur, déterminer des données de configuration du dispositif de communication entre machines (11, 11a, 11b, 11c), dans lequel les données de configuration comprennent la clé de sécurité numérique ; et
afficher les données de configuration, comprenant la clé de sécurité numérique, du dispositif de communication entre machines (11, 11a, 11b, 11c) sur l'afficheur papier électronique (2) du dispositif d'apport de configuration (1).

2. Dispositif d'apport de configuration (1) selon la revendication précédente, dans lequel le dispositif de commande (9) est agencé pour afficher au moins une partie des données de configuration sur l'afficheur papier électronique (2) sous la forme d'un code à barres.

3. Dispositif d'apport de configuration (1) selon la revendication 2, dans lequel le code à barres est un code à barres bidimensionnel.

4. Dispositif d'apport de configuration (1) selon l'une quelconque des revendications précédentes, dans lequel le dispositif d'entrée (6) comprend un bouton-poussoir.

5. Dispositif d'apport de configuration (1) selon l'une quelconque des revendications précédentes, comprenant en outre un dispositif de stockage d'énergie (12) agencé pour être la seule source de puissance du dispositif d'apport de configuration (1).

6. Dispositif d'apport de configuration (1) selon la revendication 5, comprenant en outre un convertisseur de puissance (13) agencé pour convertir une énergie mécanique provenant de l'action d'utilisateur en énergie électrique pour charger le dispositif de stockage d'énergie (12).

7. Dispositif d'apport de configuration (1) selon l'une quelconque des revendications précédentes, dans lequel les données de configuration sont affichées sur l'afficheur papier électronique (2) en utilisant la stéganographie.

8. Dispositif d'apport de configuration (1) selon l'une quelconque des revendications précédentes, dans lequel le dispositif d'entrée (6) est le seul dispositif d'entrée utilisateur du dispositif d'apport de configuration (1).

9. Dispositif de communication entre machines (11, 11a, 11b, 11c) comprenant :
un capteur (3) ou un actionneur (4) ;
une interface de communication (5) agencée pour transférer des données entre un système de commande et le capteur (3) ou l'actionneur (4) ; et
un dispositif d'apport de configuration (1) selon l'une quelconque des revendications précédentes.

10. Dispositif de communication entre machines (11, 11a, 11b, 11c) selon la revendication 9, dans lequel l'interface de communication (5) comprend une interface sans fil en champ proche.

11. Système comprenant :
un dispositif de communication entre machines (11, 11a, 11b, 11c) selon l'une quelconque des revendications 9 à 10 ; et
un dispositif portable (18) comprenant une caméra (16) et un lecteur (14) agencé pour lire les données de configuration affichées sur l'afficheur papier électronique (2) du dispositif de communication entre machines (11, 11a, 11b, 11c).

12. Procédé mis en œuvre dans un dispositif d'apport de configuration (1) comprenant un afficheur papier électronique (2), un dispositif d'entrée (6), et un dispositif de commande (9), permettant d'apporter des données de configuration d'un dispositif de communication entre machines (11, 11a, 11b, 11c) associé au dispositif d'apport de configuration (1), le procédé comprenant les étapes consistant à :
détecter (30) une action d'utilisateur utilisant le dispositif d'entrée (6) du dispositif d'apport de configuration (1), dans lequel l'action d'utilisateur déclenche une génération dynamique d'une clé de sécurité numérique du dispositif de communication entre machines (11, 11a, 11b, 11c) ;
la détermination (32) des données de configuration du dispositif de communication entre machines (11, 11a, 11b, 11c), dans lequel les données de configuration comprennent la clé de sécurité numérique ; et
l'affichage (34) des données de configuration, comprenant la clé de sécurité numérique, du dispositif de communication entre machines (11, 11a, 11b, 11c) sur l'afficheur papier électronique (2) du dispositif d'apport de configuration (1).

13. Programme d'ordinateur (71) exécuté dans un dispositif d'apport de configuration permettant d'apporter des données de configuration associées à un dispositif de communication entre machines (11, 11a, 11b, 11c) associé au dispositif d'apport de configuration (1) qui comprend un afficheur papier électronique (2), un dispositif d'entrée (6), et un dispositif de commande (9), le programme d'ordinateur (71) comprenant un code de programme d'ordinateur qui, lorsqu'il est exécuté sur le dispositif de commande (9), amène le dispositif d'apport de configuration (1) à :
détecter une action d'utilisateur utilisant le dispositif d'entrée (6) du dispositif d'apport de configuration (1), dans lequel l'action d'utilisateur déclenche une génération dynamique d'une clé de sécurité numérique du dispositif de communication entre machines (11, 11a, 11b, 11c) ;
déterminer les données de configuration du dispositif de communication entre machines (11, 11a, 11b, 11c), dans lequel les données de configuration comprennent la clé de sécurité numérique ; et
afficher les données de configuration, comprenant la clé de sécurité numérique, du dispositif de communication entre machines (11, 11a, 11b, 11c) sur l'afficheur papier électronique (2) du dispositif d'apport de configuration (1).
